# EUROPEAN PATENT APPLICATION

(11) **EP 2 876 704 A1**
(43) Date of publication of application: **27.05.2015**
(21) Application number: 13820181.9
(22) Date of filing: 17.07.2013
(51) Int. Cl.: H01M 2/20, H01M 2/10

(54) **BUS BAR MODULE**

(30) Priority: 20.07.2012 JP 2012161420
(71) Applicant: Yazaki Corporation, Tokyo 108-0073 (JP)
(72) Inventor: LIU, Haifeng, Kakegawa-shi Shizuoka 437-1421 (JP); KIKUCHI, Yukihisa, Kakegawa-shi Shizuoka 437-1421 (JP)
(74) Representative: Hoffmann Eitle
(86) International application number: PCT/JP2013/069344
(87) International publication number: WO 2014/014000

(57) **Abstract**

A bus bar module is to be installed to a battery pack for serially connecting plural battery elements in the battery pack. The bus bar module includes a module main body formed of an insulative material, a wire routing path provided on the module main body; a sensor installation portion that is provided in the wire routing path and at which a sensor for detecting temperature of at least one of the plural battery elements; and a separation tab that prevents a sensor installed in the sensor installation portion from contacting with an electrical wire routed in the wire routing path. According to the bus bar module, the sensor can be installed by utilizing the wire routing path without preparing a special space for the sensor, and abrasions of the electric wires due to contacts with the sensor can be prevented.

## Description

### TECHNICAL FIELD

The present invention relates to a bus bar module, especially to a bus bar module that is provided with wire routing paths and a sensor and is installed to a battery pack made up of plural battery elements.

### BACKGROUND ART

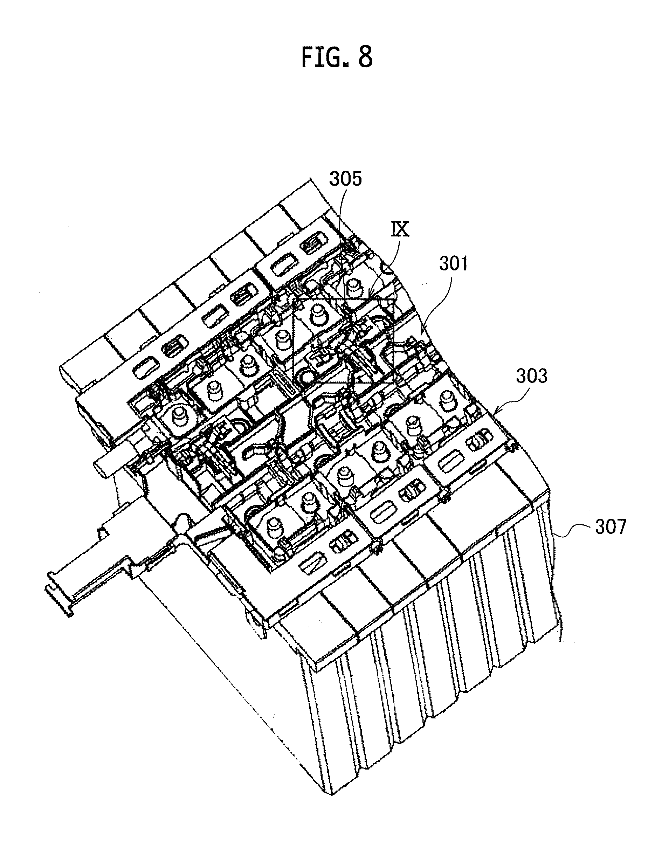

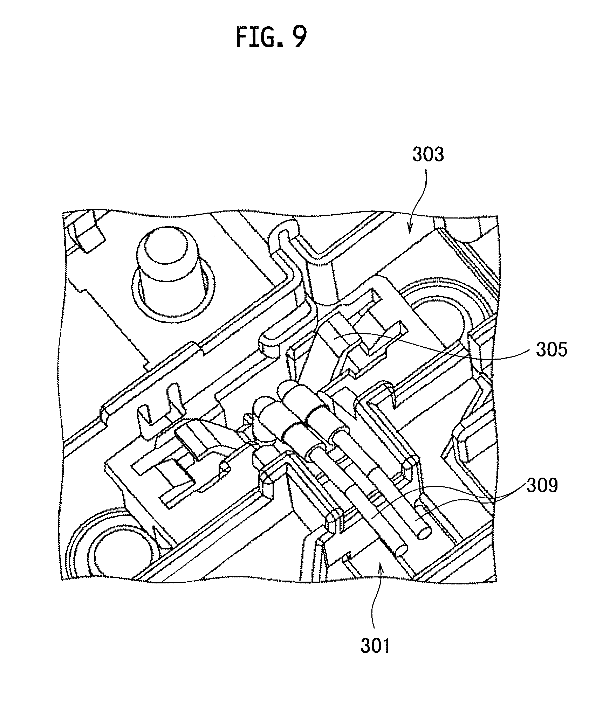

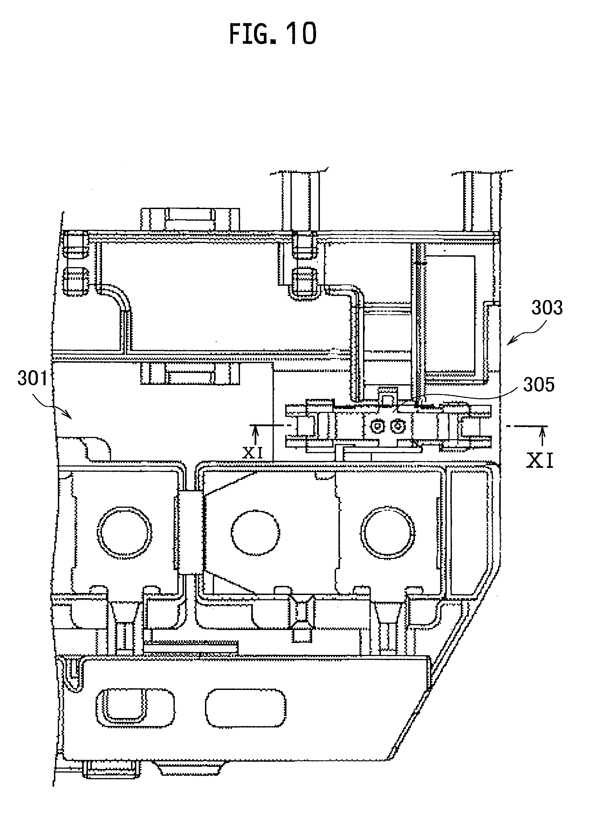

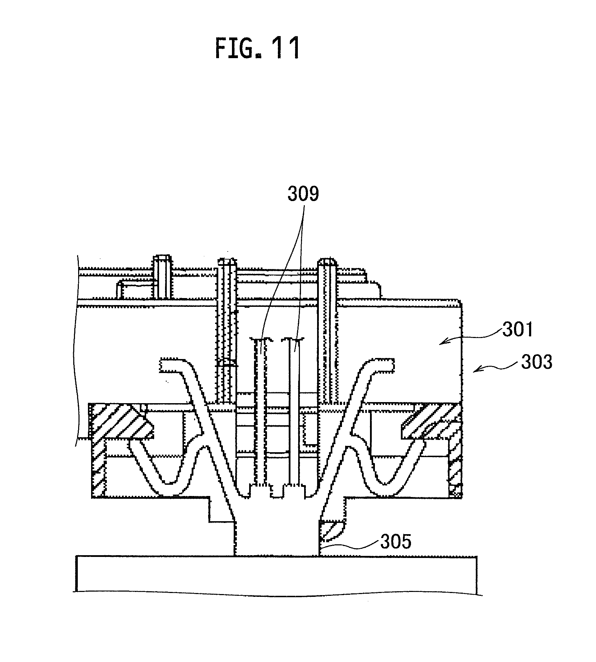

Patent Literatures 1 and 2 listed below disclose a bus bar module 301 shown in Fig. 8 to Fig. 11. The bus bar module 301 includes an insulative case 303 and a temperature sensor 305, and the temperature sensor 305 is installed to a battery pack so as to be contacted with a battery module in the battery pack. In addition, in the bus bar module 301, electric wires 309 of the sensor 305 are routed along the case 303.

### CITATION LIST

### PATENT LITERATURE

Patent Literature 1: Japanese Unexamined Patent Publication No. 2011-18454
Patent Literature 2: Japanese Unexamined Patent Publication No. 2011-60675

### SUMMARY OF INVENTION

In the bus bar module 301, it is required to prepare, on the case 303, a special space for an installation of the sensor 305. If it is tried to eliminate the special space by arranging the sensor 305 over routing paths of the electric wires 309, an attachment of the sensor 305 on the case 303 becomes difficult. In addition, if the sensor 305 is arranged over the routing paths of the electric wires 309, the electric wires 309 may be abraded due to contacts with the sensor 305, and thereby it is concerned that the electric wires 309 are short-circuited.

An object of the present invention is to provide a bus bar module in which a sensor can be installed by utilizing a routing path of electric wires without preparing a special space for the sensor, and that can prevent abrasions of the electric wires due to contacts with the sensor.

An aspect of the present invention provides a bus bar module to be installed to a battery pack for serially connecting plural battery elements in the battery pack, the module comprising: a module main body formed of an insulative material; a wire routing path provided on the module main body; a sensor installation portion that is provided in the wire routing path and at which a sensor for detecting temperature of at least one of the plural battery elements; and a separation tab that prevents the sensor installed in the sensor installation portion from contacting with an electrical wire routed in the wire routing path.

Here, it is preferable that the module main body is configures to include a first module main body and a second module main body, the sensor installation portion is provided on the first module main body, an engagement protrusion is provided near the sensor installation portion on the first module main body; an engagement receive portion that is engaged with the engagement protrusion is provided on the second module main body; and the engagement protrusion and the engagement receive portion are engaged with each other to form the separation tab when the first module main body and the second module main body are coupled with each other.

Further, it is preferable that the first module main body and the second module main body are configured so that the wire routing path on the first module main body and the wire routing path on the second module main body are communicated with each other when the first module main body and the second module main body are coupled with each other, and the sensor installation portion is provided in the wire routing path on the first module main body, the engagement protrusion is configured of a protruded tab protruded into an inside of the wire routing path on the first module main body from the sensor installation portion; the engagement protrusion is configured of a protruded tab protruded into an inside of the wire routing path on the second module main body, and a recess formed at a base end of the protruded tab, and the protruded tab on the first module main body is engaged with the recess on the second module main body when the first module main body and the second module main body are coupled with each other.

In addition, it is preferable that a sensor support arm for temporarily supporting the sensor is provided at the sensor installation portion.

### BRIEF DESCRIPTION OF DRAWINGS

[Fig. 1] These are views showing a bus bar module (a first module main body and a second module main body) according to an embodiment; (a) is a front view, and (b) is a side view when viewed from a direction indicated by an arrow IB shown in (a).
[Fig. 2] This is a perspective view of the bus bar module.
[Fig. 3] This is a perspective view of the bus bar module.
[Fig. 4] These are views showing the bus bar module (the first module main body and the second module main body) according to the embodiment; (a) is a front view, and (b) is a side view when viewed from a direction indicated by an arrow IVB shown in (a).
[Fig. 5] This is a perspective view of the bus bar module.
[Fig. 6] This is a plan view showing an entire of the bus bar module.
[Fig. 7] This is a cross-sectional view when viewed from a direction indicated by an arrow VII shown in Fig. 4.
[Fig. 8] This is a perspective view showing a prior-art bus bar module installed to a battery pack.
[Fig. 9] This is an enlarged perspective view of a portion IX shown in Fig. 8.
[Fig. 10] This is a plan view showing a featured portion of the bus bar module.
[Fig. 11] This is a cross-sectional view taken along a line XI-XI shown in Fig. 10.

### DESCRIPTION OF EMBODIMENTS

An embodiment of a bus bar module (battery connecting member) will be explained with reference to the drawings. The bus bar module 1 in the present embodiment is installed, for example, to a side face of a battery pack (not shown) in order to serially connect plural battery elements (battery modules or battery cells) in the battery pack. Note that the battery element(s) in the present embodiment is battery module(s).

Herein after, for the sake convenience of explanations, a direction in the bus bar module 1 is denoted as a longitudinal (X-axis) direction L, a direction perpendicular to the longitudinal direction L is denoted as a vertical (Y-axis) direction V, and a direction perpendicular to both of the longitudinal direction L and the vertical direction V is denoted as a thickness (Z-axis) direction T, as shown in the drawings. In addition, defined are one side A and another side B with respected to the longitudinal direction L, one side C and another side D with respect to the vertical direction V, and one side E and another side F with respect to the thickness direction T.

The battery is formed to be a long cuboid, for example, and a plus terminal and a minus terminal are protruded from its one face in its longitudinal direction. In addition, a terminal post made of copper is also protruded at the center of the plus terminal and the minus terminal.

The battery module(s) is formed to be a long cuboid, and a plus terminal and a minus terminal are protruded from its one face. The battery pack is configured of the plural battery modules having the same shape. In the battery pack, the plural battery modules are aligned to be oriented in the same direction, and a longitudinal direction of the battery module(s) is coincident with the thickness direction T (horizontal direction) of the bus bar module 1. Faces of the battery modules, from each of which the plus terminal and the minus terminal are protruded, configure one side face of the battery pack. Opposite faces of the battery modules, to the faces from each of which the plus terminal and the minus terminal are protruded, configure another side face (an opposite side face to the one side face) of the battery pack. Namely, in the battery pack, in the longitudinal direction L (horizontal direction) perpendicular to the thickness direction T, the plural battery modules are contacted with each other or distanced from each other to form a gap therebetween.

In addition, in the battery pack, in the vertical direction, sets of the battery modules aligned in the longitudinal direction L are further contacted with each other or distanced from each other to form a gap therebetween, and thereby stacked in multiple layers. Therefore, when viewing the battery pack from the thickness direction T (a side from which the plus terminals and the minus terminals are protruded), the plural battery modules are arranged in horizontal and vertical directions. Further, on one side face of the battery pack from which the plus terminals and the minus terminals are protruded, the plus terminals and the minus terminals are aligned alternately in the longitudinal direction L.

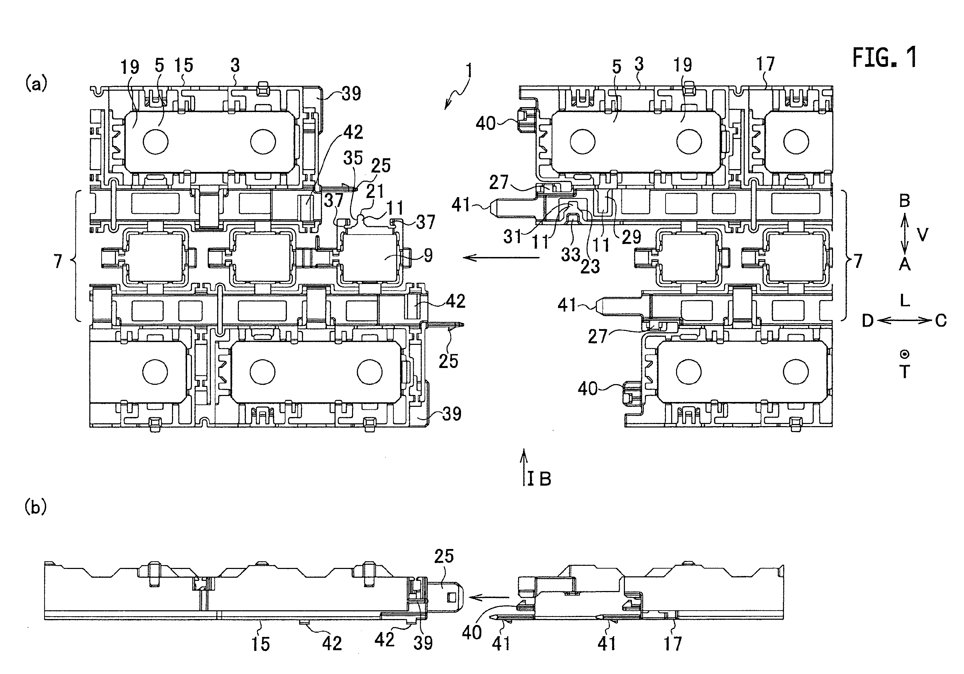

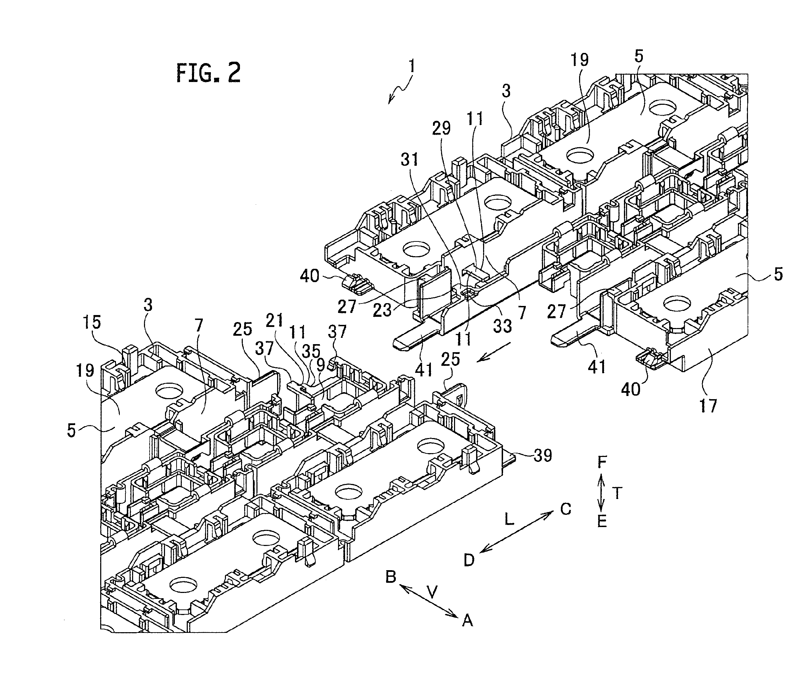

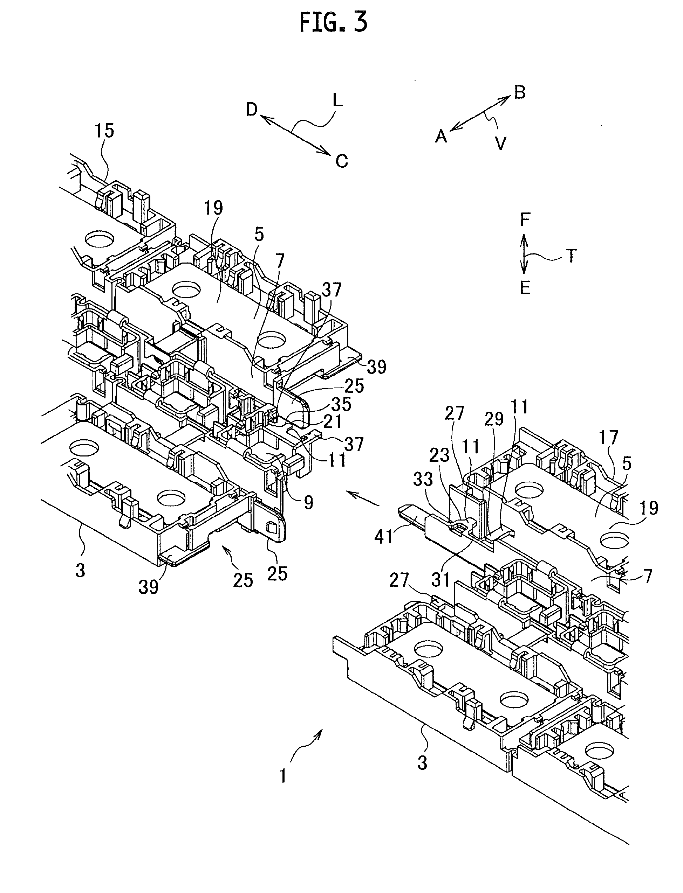

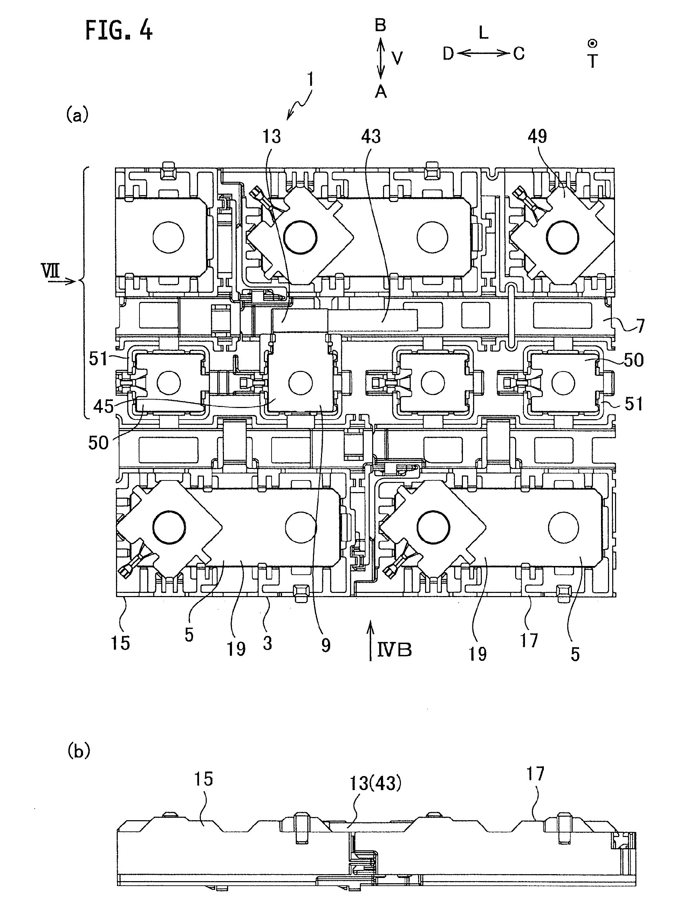

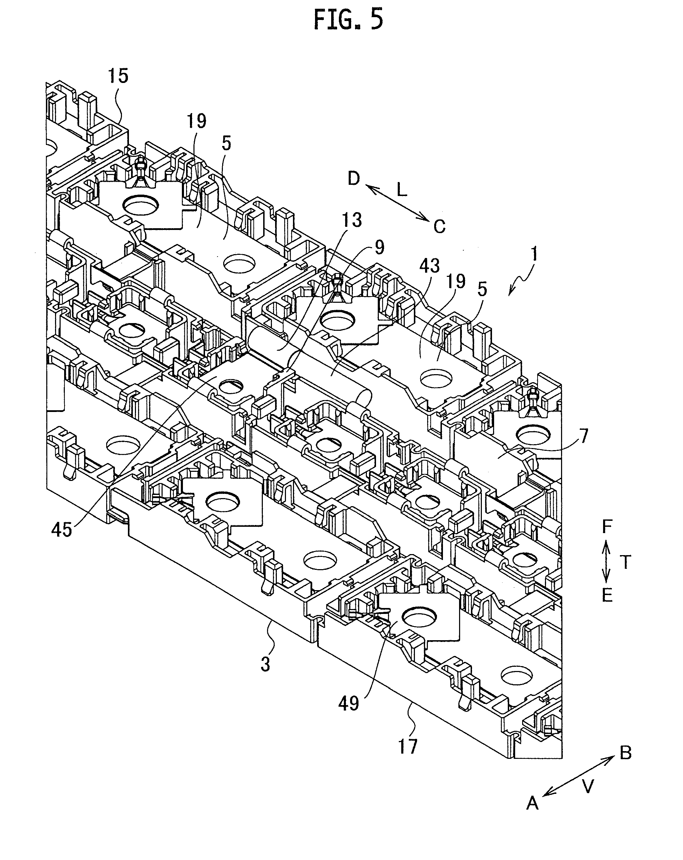

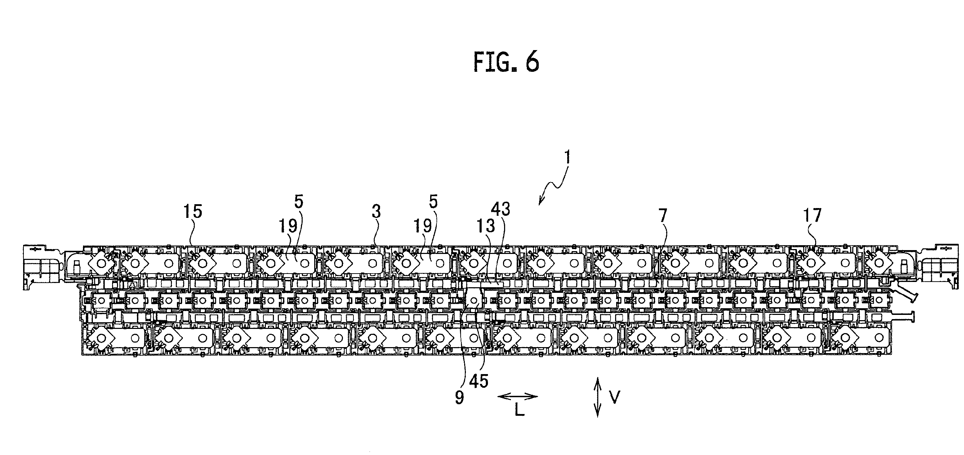

As shown in Fig. 1 to Fig. 7, the bus bar module 1 includes a module main body 3. The module main body 3 is formed of an insulative material (for example, injection-molded with insulative synthetic resin). Plural metal flat plate bus bars 5 are inset-onto and thereby held-on the module main body 3. When the bus bar module 1 is installed to the battery pack, the bus bars 5 installed on the module main body 3 are contacted with terminals of the battery modules, respectively. As a result, the battery modules are serially connected. Note that when the bus bars 5 are connected with the terminals of the battery modules, a voltage detection terminal 49 is attached to each of the bus bars 5, as shown in Fig. 4(a) and Fig. 5.

A wire routing path 7, a sensor installation portion 9, and separation tabs 11 are provided on the module main body 3. Electric wires of the voltage detection terminals 49 are routed in the wire routing path 7. The wire routing path 7 is formed so as to have a gutter shape. A sensor (temperature sensor such as a thermistor) 13 for detecting temperature of the battery modules is installed at the sensor installation portion 9. The sensor installation portion 9 is located within the wire routing path 7. The separation tabs 11 prevent the sensor 13 installed at the sensor installation portion 9 from contacting with the electric wires routed in the wire routing path 7. The separation tabs 11 separate the installed sensor 13 from the routed electric wires.

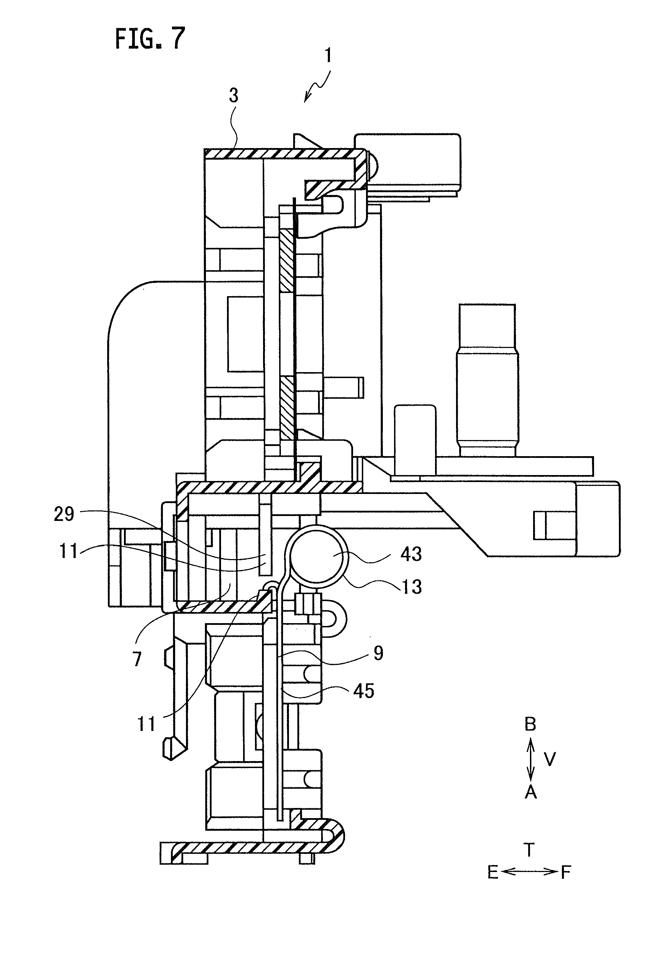

The routed electric wires are extended in the wire routing path 7, and a portion of the installed sensor 13 protrudes upward from a slot of the wire routing path 7 (goes out to the outside of the wire routing path 7 when viewed from the vertical direction V; see Fig. 4(a) and (b)). In addition, when viewed from the thickness direction T (a depth direction of the wire routing path 7), the installed sensor 13 is located at the center of a width direction of the wire routing path 7. Further, the separation tabs 11 are located between the electric wires routed in the wire routing path 7 and the sensor 13 installed at the sensor installation portion 9 in the thickness direction T (see Fig. 7).

The module main body 3 is configured of a first module main body 15 and a second module main body 17. The sensor installation portion 9 is provided on the first module main body 15. An engagement protrusion 21 is provided near the sensor installation portion 9 on the first module main body 15. On the other hand, an engagement receive portion 23 engaged with the engagement protrusion 21 is provided on the second module main body 17. When the first module main body 15 and the second module main body 17 are engaged with each other, the engagement protrusion 21 and the engagement receive portion 23 are coupled with each other, and thereby the separation tab 11 is formed by the engagement protrusion 21 and the engagement receive portion 23.

The first module main body 15 includes plural bus-bar installation portions 19, the sensor installation portion 9, the engagement protrusion 21, engagement pawls 25, engagement pawl receive portions 39, and engagement pawl receive portions 42. The second module main body 17 can be coupled with the first module main body 15, and can be separated from the first module main body 15. Note that the reason why the module main body 3 can be separated into first module main body 15 and the second module main body 17 is to avoid that mold dies get larger. In addition, by dividing the bus bar module 1 into the plural module main bodies 15 and 17, flexible handlings can be obtained even if the number of the battery modules to be connected serially increases.

The second module main body 17 includes plural bus-bar installation portions 19, the engagement receive portion 23, engagement pawls 40, and engagement pawls 41. When the first module main body 15 and the second module main body 17 are coupled with each other, the engagement protrusion 21 and the engagement receive portion are engaged with each other, the engagement pawls 25 and the engagement pawl receive portions 27 are engaged with each other, the engagement pawl receive portions 39 and the engagement pawls 40 are engaged with each other, and the engagement pawl receive portions 42 and the engagement pawls 41 are engaged with each other. In this manner, the module main body 3 is configured by the first module main body 15 and the second module main body 17. And, the bus bars 5 and so on are attached to the module main body 3, and thereby the bus bar module 1 is configured.

The separation tabs 11 are also formed by a protruded tab 29 protruded from a sidewall of the wire routing path 7, in addition to the one formed by the engagement protrusion 21 and the engagement receive portion 23 that are explained above. The wire routing path 7 is provided on the first module main body 15 and the second module main body 17. When the second module main body 17 and the first module main body 15 are coupled with each other, the wire routing path 7 on the first module main body 15 and the wire routing path 7 on the second module main body 17 are communicated with each other.

The sensor installation portion 9 is disposed within the wire routing path 7 on the first module main body 15 and near a connection end with the second module main body 17. The engagement protrusion 21 on the first module main body 15 is configured of a protruded tab 35 protruded (into the inside of the wire routing path 7) from a side of the sensor installation portion 9 to the other side D of the vertical direction V. On the other hand, the engagement receive portion 23 on the second module main body 17 is configured of a protruded tab 31 protruded (into the inside of the wire routing path 7) to the other side D of the vertical direction V and a recess 33 formed at a base end of the protruded tab 31. The protruded tab 31 is protruded (into the inside of the wire routing path 7) from a wall of the sensor installation portion 9 to the other side D of the vertical direction V. The recess 33 is formed from the base end of the protruded tab 31 to almost the center of the protruded tab 31.

In addition, on the first module main body 15, a pair of sensor support arms 37 used for temporarily installing the sensor 13 at the sensor installation portion 9 is provided on the side of the sensor installation portion 9. The above-explained protruded tab 35 is located between the pair of sensor support arms 37.

The bus bar module 1 will be explained more in detail. The first module main body 15 and the second module main body 17 are formed to have a rectangular flat shape, respectively. The wire routing path 7 is extended along a longitudinal direction of the module main body 3 (the first module main body 15 and the second module main body 17). A cross-sectional shape (cross-section in a plane perpendicular to the longitudinal direction L) of the wire routing path 7 is almost rectangular. In addition, the wire routing path 7 is located at the center of the module main body 3 in a vertical direction V. An opening of the wire routing path 7 is opened toward the other side F of the thickness direction T, and its bottom is located on the one side E.

The separation tab 11 configured of the engagement protrusion 21 and the engagement receive portion 23 (the protruded tab 31 and the recess 33) is extended to the vicinity of its opposite wall, but doesn't reach the opposite wall to form a slit for inserting wires. Also, the separation tab 11 (the protruded tab 29) formed on the second module main body 17 is extended to the vicinity of its opposite wall, but doesn't reach the opposite wall to form a slit for inserting wires. In addition, the protruded tab 31 is located near the protruded tab 29 along the longitudinal direction L, but a gap or inserting wires is formed therebetween. As electric wires routed in the wire routing path 7, electrical wires of the voltage detection terminals 49 and a wire(s) of the sensor 13 are particularized, for example.

The sensor 13 includes a cylindrical main body 43, and a rectangular support plate 45 protruded from the main body 43. The sensor installation portion 9 has a rectangular shape for accommodating the support plate 45 when viewed from the thickness direction T. Note that, in the present embodiment, as shown in Fig. 4(a) and Fig. 5, a detection terminal 50 is firstly accommodated in the sensor installation portion 9, and then the support plate 45 is put on this detection terminal 50. The support plate 45 is fastened, together with the detection terminal 50, to the terminal post protruded from the battery module. In the present embodiment, the detection terminal 50 is attached to each of the battery modules. Therefore, terminal installation portions 51 similar to the sensor installation portion 9 are also formed on the module main body 3. However, the above-explained sensor support arms 37 are not provided at each of the terminal installation portions 51. Electrical wires of the detection terminals 50 are also routed in the wire routing path 7.

In addition, when viewed from the thickness direction T, three sides of a rectangular plan of the sensor installation portion 9 are surrounded by side walls, and no side wall is formed at one side at which the sensor support arms 37 are provided. The support plate 45 of the sensor 13 is inserted to the sensor installation portion 9 from this side wall with no side wall. The sensor support arms 37 are disposed at both ends of the above-mentioned the side wall with no side wall. A distance between the pair of sensor support arms 37 (distance along the longitudinal direction L) is slightly narrower than a width of the support plate 45.

The sensor support arms 37 are elastically deformed during the installation of the sensor to the sensor installation portion 9 to be widened the distance thereof, and restore after the installation to temporarily hold the support plate 45. The sensor 13 temporarily installed in this manner is held by the sensor support arms 37 so as not to drop off easily from the sensor installation portion 9. As explained above, the protruded tab 35 is located between the pair of sensor support arms 37, and support the support plate 45 from beneath during the temporary installation of the sensor 13.

After the installation of the sensor 13 at the sensor installation portion 9, the main body 43 of the sensor 13 is, when viewed from the thickness direction T, located above an area where electric wires in the wire routing path 7 are routed. In addition, after the installation of the sensor 13 at the sensor installation portion 9, the bottom of the wire routing path 7, the wire routing area of the wire routing path 7, the separation tabs 11, and the main body 43 of the sensor13 are arranged in this order as shown in Fig. 7.

Next, assembly and installation processes of the bus bar module 1 will be explained. The module main body 3 is firstly constructed by coupling the first module main body 15 with the second module main body 17, and then the bus bars 5 are installed in the bus-bar installation portions 19 on the module main body 3. Subsequently, wires are routed in the wire routing path 7 and the sensor 13 is installed in the sensor installation portion 9, so that the bus bar module 1 is constructed. The bus bars 5 of the bus bar module 1 are fixed with (electrically connected with) the terminals of the battery modules in the battery pack, so that the bus bar module 1 is installed to the battery pack. At this time, each of the terminals of the battery modules is inserted into each through hole of the bus bars 5 (and each through hole of the voltage detection terminals 49), and then a nut is fastened thererto to fix (connect) the bus bars 5 with the terminals. In addition, the support plate 45 of the sensor 13 is attached to the terminal post of the battery module. At this time, the terminal post of the battery module is inserted into (a through hole of the detection terminal 50 and) a through hole of the support plate 45, and then a nut is fastened thererto to fix the sensor 13 with the terminal post. Temperature at the base end of the terminal post (i.e. temperature of the battery module) can be detected by the sensor via the terminal post made of copper.

According to the bus bar module 1 in the present embodiment, since the sensor 13 is installed by utilizing a partial area (the sensor installation portion 9) in the wire routing path 7, it is not needed to prepare a special installation space for the sensor 13. In addition, since the separation tabs 11 are provided, abrasions of electric wires routed in the wire routing path 7 due to contacts with the sensor 13 can be prevented. Therefore, short-circuits of the electric wire can be prevented surely.

In addition, according to the bus bar module 1, since an installation special space for the sensor 13 (main body 13) is not required and the sensor 13 can be installed easily by utilizing the wire routing path7, temperature and so on of an arbitrary battery element (a battery module or a battery cell) in the battery pack can be detected easily.

In addition, according to the bus bar module 1, when coupling the first module main body 15 and the second module main body 17 with each other, the engagement protrusion 21 and the engagement receive portion 23 are engaged with each other, and thereby the separation tab 11 is formed by the engagement protrusion 21 and the engagement receive portion 23. Therefore, rigidity of the separation tab 11 can be improved, and alignment accuracy, especially between the second module main body 17 and the first module main body 15, at a position of the separation tab 11 can be improved. As a result, contacts between the electric wires in the wire routing path 7 and the sensor 13 can be prevented surely.

In addition, according to the bus bar module 1, when coupling the first module main body 15 and the second module main body 17 with each other, the protruded tab 35 that configures the engagement protrusion 21 of the first module main body 15 is engaged with the recess 33 formed on the protruded tab 35 that configures the engagement receive portion 23 of the second module main body 17. Therefore, the second module main body 17 and the first module main body 15 can be coupled easily with each other, and the separation tab 11 can be formed with a simple structure.

In addition, since the separation tabs 11 disposed in the wire routing path 7 cover over an area of the wire routing path 7 where the sensor 13 is installed and support the sensor 13, the installation of the sensor 13 can be done easily by laying the sensor 13 on the separation tabs 11.

In addition, according to the bus bar module 1, since the sensor support arms 37 are disposed on the first module main body 15, the sensor 13 can be prevented from dropping off from the bus bar module 1 while, for example, the bus bar module 1 is carried.

## Claims

1. A bus bar module to be installed to a battery pack for serially connecting plural battery elements in the battery pack, the module comprising:
a module main body formed of an insulative material;
a wire routing path provided on the module main body;
a sensor installation portion that is provided in the wire routing path and at which a sensor for detecting temperature of at least one of the plural battery elements; and
a separation tab that prevents the sensor installed in the sensor installation portion from contacting with an electrical wire routed in the wire routing path.

2. The bus bar module according to claim 1, wherein
the module main body is configures to include a first module main body and a second module main body,
the sensor installation portion is provided on the first module main body,
an engagement protrusion is provided near the sensor installation portion on the first module main body;
an engagement receive portion that is engaged with the engagement protrusion is provided on the second module main body; and
the engagement protrusion and the engagement receive portion are engaged with each other to form the separation tab when the first module main body and the second module main body are coupled with each other.

3. The bus bar module according to claim 2, wherein
the first module main body and the second module main body are configured so that the wire routing path on the first module main body and the wire routing path on the second module main body are communicated with each other when the first module main body and the second module main body are coupled with each other, and
the sensor installation portion is provided in the wire routing path on the first module main body,
the engagement protrusion is configured of a protruded tab protruded into an inside of the wire routing path on the first module main body from the sensor installation portion;
the engagement protrusion is configured of a protruded tab protruded into an inside of the wire routing path on the second module main body, and a recess formed at a base end of the protruded tab, and
the protruded tab on the first module main body is engaged with the recess on the second module main body when the first module main body and the second module main body are coupled with each other.

4. The bus bar module according to any one of claims 1 to 3, wherein
a sensor support arm for temporarily supporting the sensor is provided at the sensor installation portion.
